# EUROPÄISCHE PATENTSCHRIFT

(11) **EP 1 535 592 B1**
(45) Veröffentlichungstag und Bekanntmachung des Hinweises auf die Patenterteilung: **21.02.2007**
(21) Anmeldenummer: 04027661.0
(22) Anmeldetag: 22.11.2004
(51) Int. Cl.: A61G 3/06

(54) **Einstiegsrampe für Kraftfahrzeuge, insbesondere Kraftfahrzeuge des öffentlichen Personennahverkehrs**
Entrance ramp for vehicles, in particular public service vehicles
Rampe d'accès pour véhicule, en particulier pour véhicules de transport en commun

(30) Priorität: 25.11.2003 DE 20318186 U
(43) Veröffentlichungstag der Anmeldung: 01.06.2005
(73) Patentinhaber: Gebr. Bode GmbH & Co. KG, 34123 Kassel (DE)
(72) Erfinder: Böde, Ralf, 34590 Wabern (DE); Grein, Horst, 34637 Schrecksbach (DE); Sprenger, Thorsten, 34253 Lohfelden (DE)
(74) Vertreter: Feder, Wolf-Dietrich

(56) Entgegenhaltungen:
- EP-A- 0 976 376
- EP-A- 1 029 523
- WO-A-00/09060
- GB-A- 2 301 082
- GB-A- 2 306 152

## Beschreibung

Die Erfindung betrifft eine Einstiegsrampe für Kraftfahrzeuge, insbesondere für Kraftfahrzeuge des öffentlichen Personennahverkehrs, mit den Merkmalen aus dem Oberbegriff des Patentanspruchs 1. Eine derartige Einstiegsrampe ist an sich bekannt und in GB 2 301 082 A beschrieben.

Derartige Einstiegsrampen werden im allgemeinen von Hand aus der Ruhestellung in die Einstiegsstellung und wieder zurück geklappt und daher auch als "Handklapprampen" bezeichnet.

Die Bodenwanne dient zur Aufnahme der Trittplatte in der Ruhestellung und verbindet die Trittplatte mit dem Untergestell des Kraftfahrzeugs. In der Einstiegsstellung stellt die Trittplatte den Übergang zum Befahren oder Betreten des Fahrzeugfußbodens her.

Die Herstellung und Montage geschieht bei den bekannten Einstiegsrampen in der Weise, dass die Bodenwanne vom Fahrzeughersteller selbst hergestellt und in den Rohbau des Kraftfahrzeugs, beispielsweise eines Busses, eingeschweißt wird. Die Trittplatte wird von Zulieferem hergestellt und nachträglich montiert. Um genügend Toleranzausgleich bei der Montage der Trittplatte zu haben, wird auf enge Spaltmaße verzichtet und mittels zusätzlicher Abdeckleisten an der Oberseite der Trittplatte eine Überdeckung über den Rand der Bodenwanne hinaus geschaffen, die aber einen hohen Rand bildet und somit eine Stolperkante darstellt.

Der Erfindung liegt die Aufgabe zugrunde, eine Einstiegsrampe mit den im Oberbegriff des Patentanspruchs 1 angegebenen Merkmalen so auszugestalten, dass eine schnelle Fertigung und Montage der gesamten Einstiegsrampe möglich ist. Die Bodenwanne sollte eine hohe Stabilität aufweisen, und es sollte eine Einbaumöglichkeit bei Kraftfahrzeugen mit unterschiedlichem Einbaumaß ermöglicht werden können, ohne dass zusätzliche Abdeckleisten benötigt werden.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Ein Grundgedanke der Erfindung besteht darin, die Bodenwanne als einstückiges Teil mittels eines Tiefziehwerkzeuges herzustellen, wodurch eine sehr schnelle Fertigung erreicht werden kann. Dabei ist in die Bodenwanne ein offenes Noppen- und/oder Sickenmuster zur Aussteifung des Wannenbodens und zur Herstellung der Rutschfestigkeit sowie zur Kanalisierung und Ableitung von Wasser integriert Im Bereich der Befestigung des Scharniergelenks ist mindestens eine Sicke in Querrichtung verlaufend angeordnet, die zur Queraussteifung und zur Ableitung von Flüssigkeit zu den Seitenbereichen dient. Bei der Anordnung von mehreren Quersicken kann die Bodenwanne nachträglich um einen definierten Längenbetrag gekürzt werden und somit auch in Kraftfahrzeuge mit geringerem Einbaumaß eingebaut werden.

Wie weiter unten anhand eines Ausführungsbeispiels erläutert, können in der Bodenwanne im seitlichen und hinteren Bereich Bohrungen angeordnet sein zur Aufnahme von Anschlagpuffern, welche eine scheuerfreie und gedämpfte Auflage der Trittplatte gewährleisten und Beschädigungen an der Bodenwanne oder der Trittplatte während des Betriebes verhindern. Weiterhin kann in der Bodenwanne noch ein Durchgangsloch mit Befestigungsbohrungen für den Anbau eines elektrischen Näherungsschalters zur Anzeige der jeweiligen Stellung der Trittplatte angeordnet sein.

Weiterhin können an der in der Ruhestellung nach oben weisenden Seite der Trittplatte in den seitlichen und hinteren Randbereichen der Trittplatte Randprofilleisten und am vorderen Rand eine Trittleiste angeordnet sein, die aus Aluminium-Strangpressprofilen bestehen können und mit der Trittplatte durch Klebung verbunden sind.

Es hat sich gezeigt, dass die erfindungsgemäße Einstiegsrampe sehr kostengünstig herstellbar und montierbar ist. Sie kann als Baukastensystem bzw. in Modulbauweise hergestellt und gelagert und als Komplettlösung, d.h. einbaufertig, geliefert werden. Sie besitzt ein geringes Gewicht und ist leicht zu montieren. Durch Austausch von Modulen können ohne besonderen Aufwand unterschiedliche Varianten gebildet werden. Der Pflegeaufwand ist gering, und den sichtbaren Teilen kann in einfacher Weise ein modernes, ansprechendes optisches Erscheinungsbild gegeben werden.

Es ist eine komplette Montage der erfindungsgemäßen Einstiegsrampe in das Untergestell des Kraftfahrzeugs möglich, die keine besonderen Kenntnisse oder Werkzeuge erfordert. Als Verbindungselement zwischen der Bodenwanne und dem Untergestell des Kraftfahrzeugs kann ein Einkomponenten-Industrieklebstoff auf PUR-Basis dienen.

Die Trittplatte kann als eigenständiges Modul aufgebaut sein, das mit wenigen Verbindungselementen zusammenbaubar ist. Sie kann als Sandwichplatte aufgebaut sein.

Die Stabilität der Bodenwanne wird nach dem Einbau durch die Auflage auf den Fußboden und das Trägerwerk des Untergestells des Kraftfahrzeugs hergestellt. Für die nicht unterstützten Bereiche bilden diagonal verlaufende Sicken das aussteifende Element. Schmelzwasser, welches beim Betreten oder Befahren in der Bodenwanne verbleibt oder Wasser aus der Reinigung des Fußbodens bzw. der Wanne läuft bei ausreichender Menge links und rechts des Scharniergelenks aus Wasserablaufspalten auch bei geschlossener Trittplatte ab.

Im folgenden wird anhand der beigefügten Zeichnungen ein Ausführungsbeispiel für eine Einstiegsrampe nach der Erfindung näher erläutert.

In den Zeichnungen zeigen:
- Fig. 1: eine Einstiegsrampe mit geschlossener Trittplatte in perspektivischer Darstellung;
- Fig. 2: die eingebaute Bodenwanne der Einstiegsrampe nach Fig. 1 in perspektivischer Darstellung;
- Fig. 3: die Bodenwanne nach Fig. 2 in etwas vergrößerter perspektivischer Darstellung vor dem Einbau;
- Fig. 4: eine Aufsicht auf die Bodenwanne nach Fig. 3;
- Fig. 5: eine Aufsicht auf die eingebaute Einstiegsrampe nach Fig. 1 bis 4 im ausgeklappten, geöffneten Zustand der Trittplatte;
- Fig. 6: die Einstiegsrampe nach Fig. 5 im eingeklappten, geschlossenen Zustand der Trittplatte.

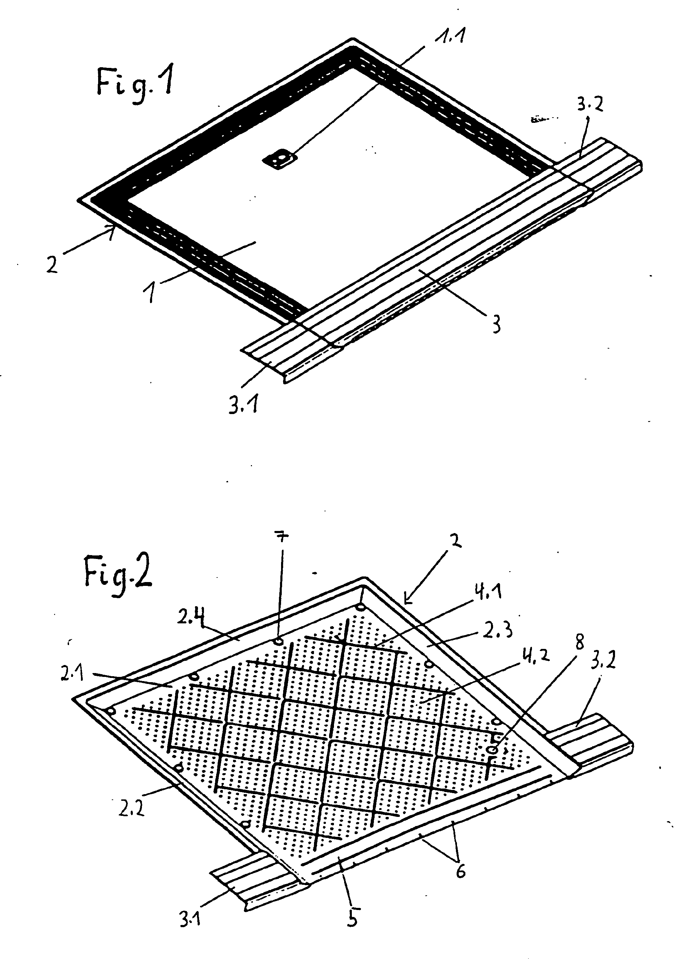

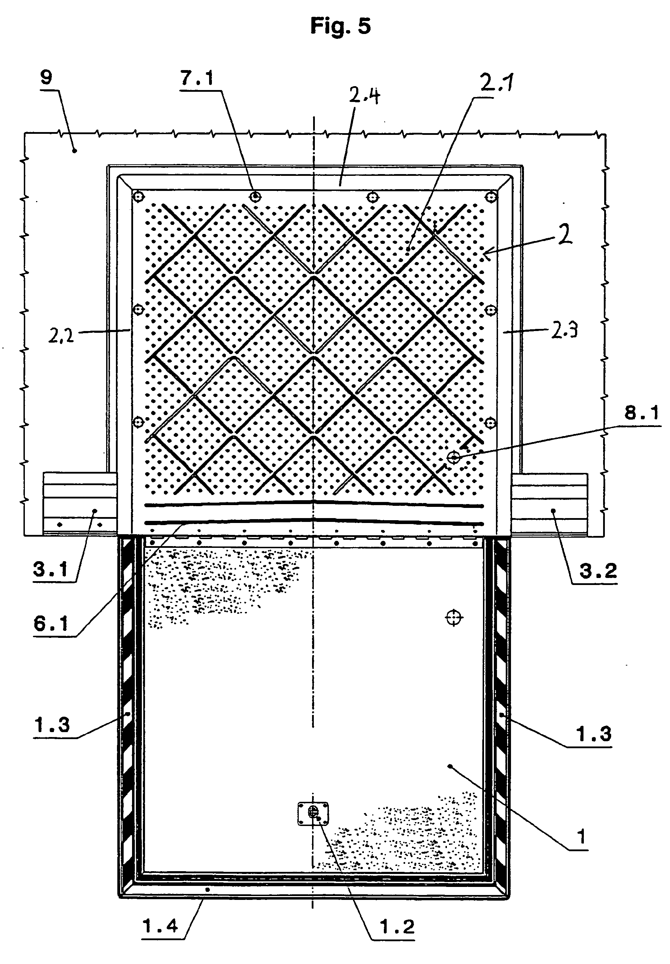

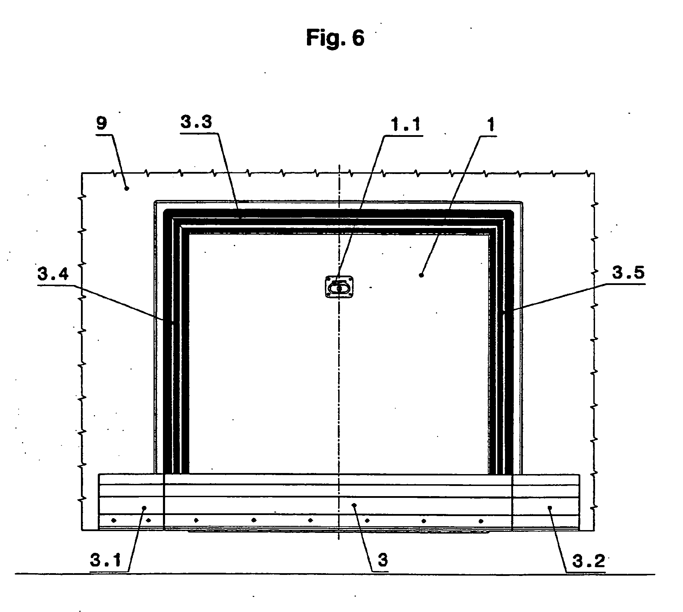

In den Fig. 1 bis 6 ist eine Einstiegsrampe für ein Kraftfahrzeug dargestellt, wobei, obwohl die Einstiegsrampe teilweise im eingebauten Zustand dargestellt ist, von dem Kraftfahrzeug allenfalls, wie aus den Fig. 5 und 6 zu entnehmen, ein Teil des Fußbodens 9 im Fahrzeuginneren im Einstiegsbereich einer Tür sowie Teile einer Trittleiste 3.1 und 3.2 in diesem Einstiegsbereich dargestellt sind.

Die Einstiegsrampe besitzt eine Trittplatte 1, die, wie ebenfalls aus Fig. 5 und 6 zu ersehen, im Einstiegsbereich der nicht dargestellten Tür des Kraftfahrzeugs und unmittelbar an die Außenkante des Einstiegsbereichs anschließend angeordnet ist und die aus einer in Fig. 6 dargestellten geschlossenen Ruhestellung um ein an der Außenkante des Einstiegsbereichs angeordnetes Scharniergelenk 6.1 aus dem Fahrzeuginneren nach außen in eine in Fig. 5 dargestellte Einstiegsstellung herausklappbar ist, in der die Trittplatte eine Verbindung zwischen dem Fußboden im Fahrzeuginneren und einem Bordstein oder dergleichen außerhalb des Fahrzeugs darstellt. Das Aus- und Einklappen der Trittplatte 1 geschieht manuell mittels Handgriffen 1.1 bzw. 1.2, die an den beiden Oberflächen der Trittplatte 1 angeordnet sind.

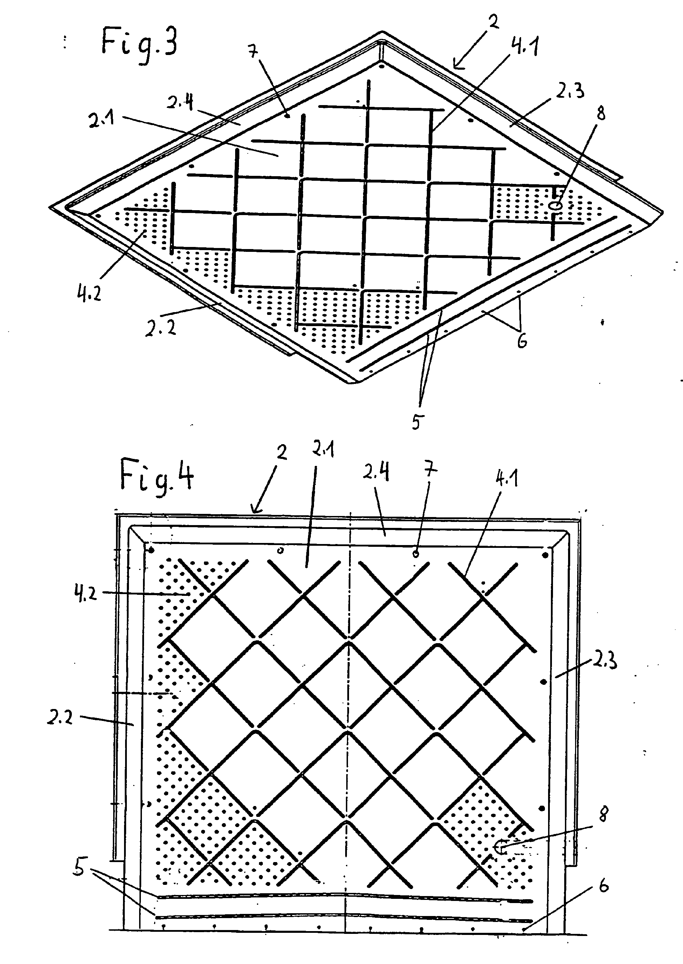

Die insbesondere in den Fig. 2 bis 4 dargestellte Bodenwanne 2 der Einstiegsrampe, die mit dem Fahrzeugboden und dem nicht dargestellten Fahrzeugchassis verbunden ist, dient zur Aufnahme der Trittplatte in der Ruhestellung gemäß den Fig. 1 und 6. Sie ist als einstückiges Tiefziehteil z.B. aus Edelstahl hergestellt und besitzt einen Boden 2.1 sowie Seitenwände 2.2 und 2.3 an beiden Seitenkanten und eine Rückwand 2.4 an der Hinterkante. Die Vorderkante der Bodenwanne 2 ist offen und besitzt Bohrungen 6 zur Befestigung des in Fig. 5 sichtbaren Scharniergelenks 6.1. Der Boden 2.1 der Bodenwanne 2 ist mit eingeprägten offenen Sicken 4.1 und Noppen 4.2 versehen, die ein in den Fig. 3 und 4 nur teilweise dargestelltes Muster bilden und zur Aussteifung und Erhöhung der Rutschfestigkeit des Bodens 2.1 der Bodenwanne 2 dienen.

Im Bereich der Vorderkante der Bodenwanne 2 sind in einem vorgegebenen Abstand von den Bohrungen 6 für das Scharniergelenk zwei in Querrichtung verlaufende Sicken 5 in vorgegebenem Abstand voneinander angeordnet, die zur Queraussteifung des Bodens im Bereich des Scharniergelenks dienen sowie zur Ableitung von Flüssigkeit zu den Seitenbereichen hin.

Im Bereich dieser Sicken 5 kann die Bodenwanne 2 nachträglich um einen definierten Abstand gekürzt werden, wenn beim Einbau in das Kraftfahrzeug ein geringeres Einbaumaß benötigt wird.

Im Bereich unmittelbar vor der Rückwand 2.4 und den Seitenwänden 2.2 und 2.3 der Bodenwanne 2 sind im Boden 2.1 Bohrungen 7 angeordnet, die zur Befestigung von Anschlagpuffern 7.1 (Fig. 5) dienen, welche als Auflage für die Trittplatte 1 in der Ruhestellung wirksam sind. Weiterhin ist im Boden 2.1 der Bodenwanne 2 eine Öffnung 8 vorgesehen zur Anordnung eines elektrischen Näherungsschalters 8.1 (Fig. 5), der zur Anzeige der Stellung der Trittplatte 1 dient.

Wie den Fig. 5 und 6 zu entnehmen, sind an der in der Ruhestellung (Fig. 6) nach oben weisenden Seite der Trittplatte 1 in den seitlichen Randbereichen und im hinteren Randbereich der Trittplatte 1 Randprofilleisten 3.4 und 3.5 bzw. 3.3 angeordnet, und am vorderen Rand der Trittplatte 1 in der Ruhestellung ist eine Trittleiste 3 angeordnet, die unmittelbar an die Trittleistenteile 3.1 und 3.2 auf dem Fußboden 9 des Kraftfahrzeugs anschließt. Die Randprofilleisten und die Trittleiste können aus Aluminium-Strangpressprofilen bestehen und sind mit der Trittplatte 1 durch Klebung verbunden.

Der in der Einstiegsstellung der Trittplatte 1 (Fig. 5) sichtbare Außenrand 1.3 der Trittplatte 1, der durch die Unterseiten der Randprofilleisten 3.4 und 3.5 gebildet wird, ist mit optisch auffälligen reflektierenden Warnstreifen versehen.

In ähnlicher Weise ist der Randbereich 2.4 an der Rückseite der Trittleiste 3 mit einem Streifen in einer Sicherheitsfarbe, beispielsweise gelb, versehen.

## Patentansprüche

1. Enstiegsrampe für Kraftfahrzeuge, insbesondere Kraftfahrzeuge des öffentlichen Personennahverkehrs, mit einer Trittplatte (1), die im Einstiegsbereich einer Tür des Kraftfahrzeugs unmittelbar an die Außenkante des Einstiegsbereichs anschließend angeordnet werden kann und die aus einer Ruhestellung um ein im Einstiegsbereich angeordnetes Gelenk (6.1) aus dem Fahrzeuginneren nach außen in eine Einstiegsstellung herausklappbar ist und mit einer Bodenwanne, die im Einstiegsbereich des Kraftfahrzeugs im Fahrzeugboden zur Aufnahme der Trittplatte in der Ruhestellung angeordnet werden kann, mit einem Boden (2.1) und Seitenwänden (2.2, 2.3) an den beiden Seitenkanten sowie einer offenen Vorderkante, an der das als Scharniergelenk ausgebildete Gelenk (6.1) der Trittplatte angeordnet ist, **dadurch gekennzeichnet, dass** die Bodenwanne (2) als einstückiges Tiefziehteil ausgebildet ist und eine weitere Seitenwand (2.4) an der Hinterkante aufweist und der Boden (2.1) der Bodenwanne (2) mit einem eingeprägten Noppen- und/oder Sickenmuster (4.1 - 4.2) zur Aussteifung und Erhöhung der Rutschfestigkeit versehen ist, und dass vor der Vorderkante der Bodenwanne (2) im Bereich des Scharniergelenks (6.1) mindestens eine in Querrichtung verlaufende Sicke (5) angeordnet ist zur Queraussteifung und zur Ableitung von Flüssigkeit zu den Seitenbereichen hin.

2. Einstiegsrampe nach Anspruch 1, **dadurch gekennzeichnet, dass** zwei in Querrichtung verlaufende Sicken (5) in vorgegebenem Abstand voneinander angeordnet sind.

3. Einstiegsrampe nach einem der Ansprüche 1 oder 2, **dadurch gekennzeichnet, dass** im Bereich der Hinterkante und der Seitenkanten der Bodenwanne (2) Anschlagpuffer (7.1) als Auflage für die Trittplatte (1) in der Ruhestellung angeordnet sind.

4. Einstiegsrampe nach einem der Ansprüche 1 bis 3, **dadurch gekennzeichnet, dass** im Wannenboden (2.1) ein elektrischer Näherungschalter (8.1) zur Anzeige der Stellung der Trittplatte (1) angeordnet ist.

5. Einstiegsrampe nach einem der Ansprüche 1 bis 4, **dadurch gekennzeichnet, dass** an der in der Ruhestellung nach oben weisenden Seite der Trittplatte (1) in den seitlichen und hinteren Randbereichen der Trittplatte (1) Randprofilleisten (3.3, 3.4, 3.5) und am vorderen Rand eine Trittleiste (3) angeordnet sind.

## Claims

1. Entry ramp for motor vehicles, in particular local public transport vehicles, having a stepboard (1), which may be disposed in the entry region of a door of the motor vehicle directly adjoining the outer edge of the entry region and which is foldable about a joint (6.1) disposed in the entry region from an inoperative position out of the vehicle interior into an entry position, and having a floor pan, which may be disposed in the entry region of the motor vehicle in the vehicle floor for accommodating the stepboard in the inoperative position and has a base (2.1) and side walls (2.2, 2.3) on the two lateral edges as well as an open front edge, on which the joint (6.1) in the form of a hinge joint of the stepboard is disposed, **characterized in that** the floor pan (2) takes the form of an integral deep-drawn part and has a further wall (2.4) on the rear edge and the base (2.1) of the floor pan (2) is provided with an embossed pimple- and/or bead pattern (4.1 - 4.2) for reinforcement and for enhancing the non-slip property, and that in front of the front edge of the floor pan (2) in the region of the hinge joint (6.1) at least one bead (5) extending in transverse direction is disposed for transverse reinforcement and for removing liquid towards the lateral regions.

2. Entry ramp according to claim 1, **characterized in that** two beads (5) extending in transverse direction are disposed at a defined distance from one another.

3. Entry ramp according to one of claims 1 or 2, **characterized in that** in the region of the rear edge and the lateral edges of the floor pan (2) stop buffers (7.1) are disposed as a support for the stepboard (2) in the inoperative position.

4. Entry ramp according to one of claims 1 to 3, **characterized in that** disposed in the pan base (2.1) is an electric proximity switch (8.1) for indicating the position of the stepboard (1).

5. Entry ramp according to one of claims 1 to 4, **characterized in that** on the side of the stepboard (1) that faces upwards in the inoperative position edge section strips (3.3, 3.4, 3.5) are disposed in the lateral and rear edge regions of the stepboard (1) and a tread strip (3) is disposed on the front edge.

## Revendications

1. Rampe d'accès pour véhicules, en particulier pour véhicules de transport en commun, dotée d'un plateau-décrottoir de marchepied (1) qui peut être placé dans la zone d'entrée d'une porte du véhicule directement à la suite de l'arête extérieure de la zone d'entrée et qui peut, depuis une position de repos, être sorti de l'intérieur du véhicule vers l'extérieur dans une position d'accès en le faisant pivoter autour d'une articulation (6.1) agencée dans la zone d'entrée, dotée d'un bac de sol qui peut être disposé dans la zone d'entrée du véhicule dans le plancher pour loger le plateau-décrottoir de marchepied dans la position de repos et doté d'un fond (2.1) et de parois latérales (2.2, 2.3) sur les deux arêtes latérales ainsi que sur une arête avant ouverte sur laquelle se trouve l'articulation (6.1) du plateau-décrottoir de marchepied conçue sous forme de charnière, **caractérisée en ce que** le bac de sol (2) est conçu sous forme de pièce d'emboutie d'un seul tenant et présente une autre paroi latérale (2.4) sur l'arête arrière, **en ce que** le fond (2.1) du bac de sol (2) est doté d'un dessin à noppes et/ou à moulures (4.1 - 4.2) imprimé pour renforcer et augmenter l'effet antidérapant et **en ce qu'**au moins une moulure (5) s'étendant dans la direction transversale est disposée avant l'arête avant du bac de sol (2) dans la zone de l'articulation à charnière (6.1) pour le renforcement transversal et pour la déviation des liquides vers les zones latérales.

2. Rampe d'accès selon la revendication 1, **caractérisée en ce que** deux moulures (5) s'étendant dans la direction transversale sont disposées à une distance donnée l'une de l'autre.

3. Rampe d'accès selon l'une quelconque des revendications 1 ou 2, **caractérisée en ce que** des butoirs d'arrêt (7.1) servent de support pour le plateau-décrottoir de marchepied (1) dans la position de repos dans la zone de l'arête arrière et des arêtes latérales du bac de sol (2).

4. Rampe d'accès selon l'une quelconque des revendications 1 à 3, **caractérisée en ce qu'**un détecteur de proximité électrique (8.1) sert à indiquer la position du plateau-décrottoir de marchepied (1) dans le bac de sol (2.1).

5. Rampe d'accès selon l'une quelconque des revendications 1 à 4, **caractérisée en ce que** des barres profilées périphériques (3.3, 3.4, 3.5) sont disposées sur le côté du plateau-décrottoir de marchepied (1) tourné vers le haut dans la position de repos dans les zones périphériques latérales et arrière du plateau-décrottoir de marchepied (1) et **en ce qu'**une barre de marche (3) est agencée sur le bord avant.
